# EUROPEAN PATENT SPECIFICATION

(11) **EP 4 641 155 B1**
(45) Date of publication and mention of the grant of the patent: **30.09.2026**
(21) Application number: 24171815.4
(22) Date of filing: 23.04.2024
(51) Int. Cl.: G01K 1/143, G01K 1/16, G01K 13/02, G01K 1/14

(54) **NON-INVASIVE TEMPERATURE SENSOR**
NICHTINVASIVER TEMPERATURSENSOR
CAPTEUR DE TEMPÉRATURE NON INVASIF

(43) Date of publication of application: 29.10.2025
(73) Proprietor: ifm electronic gmbh, 45128 Essen (DE)
(72) Inventor: Carro, David, Havertown PA, 19083 (US)
(74) Representative: Ifm Patentabteilung

(56) References cited:
- EP-B1- 3 526 564
- JP-A- 2016 044 843

## Description

The invention relates to non-invasive temperature sensor and, more particularly, a sensor fixed on pipes.

Non-invasive temperature sensors are interesting for the industry because they can be applied on the outside of the piping without modifying it or intruding into the circuit.

The present invention is further concerned with a measuring device for determining and/or monitoring at least the temperature of a medium flowing through a pipe or in a vessel, placed on the surface of chosen container. The measuring device, which is a non-invasive temperature sensor, preferably comprises at least one sensing element for determining and/or monitoring the temperature, a housing containing the sensing element, a heat conducting element and a clamping system allowing fixation on the container.

A basic solution for non-invasive temperature sensors consists of attaching and coupling a temperature-measuring apparatus (e.g. thermocouple, RTD etc.) directly onto the external surface of the process conduit. This arrangement may then be enveloped in insulation to minimize the impact of ambient conditions on the measurements. The accuracy of the measurements is notably contingent on the method of attachment and coupling, and a sufficient contact between the sensing surface and the pipe surface is expected.

The patent EP3526564B1 presents a non-invasive temperature sensor body containing a sensing element, a heat-conducting pad around the sensing element and a heat conducting sheet. This solution uses heat conducting pad which are expensive and the material may not be durable enough as may degrade when pressure is applied, which is the case when the temperature sensor is applied against a pipe. As a matter of fact, the heat conducting material may degrade and leak out of the sensor body. However, the solution means to be applicable on different pipe diameters, thanks to the metal sheet which is configured to adapt to various curvatures of measured surface.

The patent application DE102006003602A1 concerns a non-invasive temperature sensor with a sealing system, the sealing is shaped to the pipe surface shape which is limiting in the application of the solution onto different sizes and shapes of pipe or container. The sealing acts only during the contact between the measured surface, but it could be failed by a defect or a non-sufficient contact in the contact zone between the sealing and the surface. The pre-shaped sealing associated to a different pipe size could also be an obstacle for sufficient contact between the tip of the temperature sensor and the measured surface. The construction of the sensor and the sealing system is complex, and this solution could be expensive and not guaranty optimal temperature measurement or good contact between the sensor and the pipe.

The patent US10466113B2 presents a temperature sensor, where the contact between the surface of the pipe and the temperature sensor is enhanced by a thin conductive foil, but the cap of the measuring element, used as a coupling element does not adapt to the surface shape which provides only a small surface of contact, hence a higher thermal resistance which is inversely proportional to the surface. The high thermal resistance hinder the good temperature measurement.

The patent application US2022260432A1 concerns a non-invasive temperature measurement and calculation system which presents a box containing a measurement device and attached to the pipe. It provides also an interface material between the pipe and the sensors which are compressed onto the pipe surface to assure a contact. Nevertheless, the rigid box may be limited in assuring a sufficient contact between the measurement device and the pipe surface for different pipe diameter, and the silicone-based heat conducting material may not have sufficient durability in those kind of application, where it is put under pressure, besides being an expensive material. This solution presented as such may lack durability while being expensive and not adaptable to different pipe diameter.

The patent US11415466B2 presents a temperature measuring device composed of a thermocouple and a processing device, where the sensing element of the thermocouple is placed on the surface of a container or a pipe beneath the isolation of the container/pipe.

Another approach is shown in document JP 2016 044843 A, which discloses a temperature detection device for a stove burner. This device includes an insulating member arranged between a holder and a heat collecting member. The purpose of this insulating member is to thermally insulate the heat collecting member from the holder, thereby preventing radiant heat from the stove flame from affecting the temperature measurement. This document thus addresses the problem of thermal insulation in a different technical context. However, the prior art fails to provide a solution that addresses the need for effective thermal insulation of the heat collecting member from heat loss during the heat transfer from the pipe or container to the heat collecting member, while simultaneously providing a robust and reliable environmental seal for the internal sensing components within a single, integrated compressible tip structure.

The thermometers on the market used for non-invasive measurements are complex to manufacture, require multiple layers or components and/or are using expensive material, which make the solutions expensive. Other state of the art may not present durability because of the sensor construction or used materials such as heat conducting pads, or because of lack of sealing. Finally, in other prior art solutions the contact between the sensor tip and the pipe may be inefficient because it does not adapt to pipes of different diameters or different shapes, and may lead to inaccurate measurements.

The objective of the present invention is to provide a more durable, easy to manufacture, while cost-effective non-invasive temperature sensor able to be used on multiple pipe diameters.

This objective is achieved by the temperature sensor according to claim 1. Advantageous embodiments are specified in the further dependent claims.

According to the present invention, the non-invasive temperature sensor comprises a sensor housing, a sensing element arranged within the sensor housing, a flexible heat conducting sheet arranged on a side of the temperature sensor configured to face the pipe when in use, the heat conducting sheet being thermally coupled to the sensing element and adapted to conform to the surface shape of the pipe, and a clamping system configured to firmly mount the temperature sensor on the pipe, a sealed compressible tip which is formed by a compressible, thermally insulating rubber element which is arranged between the sensor housing and a flexible heat conducting sheet. In the sensor housing and that rubber element is placed a cylindrical element surrounding the sensing element and, which is connected to the heat conducting sheet. The cylindrical element also arranged in the sensor housing in a way that the rubber element provides a seal against the outer surface of the cylindrical element.

The rubber element in this invention has several roles as it keeps the heat conducting sheet against the pipe while acting as heat barrier keeping the heat from loss during the transfer from pipe to sensing element through the thin sheet, and placed between the housing and the cylindrical element and making contact with those it seals the sensor.

The temperature sensor is firmly mounted on the pipe thanks to a clamping system. This clamping system is closed on its extremities by a tightening system which can be any tightening system with adaptable tightening force, such as a screw type tightening system. The clamping system arranged around the housing is consequently applying axial force on the housing, the deformable rubber, and the heat conducting sheet with the sensing element, toward the pipe assuring a constant contact of the temperature sensor against the pipe.

The clamping mechanism, by a particular geometry which leaves a flexure in the clamp after tightening to the pipe, provides continuous adjustment of tensioning to maintain sufficient force. This flexure takes up any loosening which happens when the sensor is subjected to changes in temperature, causing relaxation of the materials and compression set. This maintains sensor performance across a range of environmental and process conditions.

In a preferred embodiment the sensing element is adhered to the sheet, which allows a good heat transfer and contact between the temperature sensor and the pipe.

The heat conducting sheet is preferably a metal thin sheet, such as a stainless-steel sheet.

In a preferred embodiment the cylindrical element is welded to the heat conducting sheet, and this combination is acting as a sealing for the sensor.

The rubber element is preferably made of a high grade of raw material, such as FKM or EPDM, which assures durability against temperature and caustics.

Advantageously, the temperature measure and conformal contact against pipes of different diameters is optimized by the sensing tip structure, as the wide heat conducting sheet is thermally coupled to the sensing element and the heat conducting sheet deforms and adapt to the pipe surface under the force applied through the rubber element by the holding mechanism, meanwhile the rubber element isolating the circumference of the heat conducting sheet keeps the thermal energy from loss and allows it to be transferred to the sensing element. The rubber used in the solution and the thin sheet being durable and affordable materials, and the solution being easily manufacturable, the temperature sensor is a durable and affordable solution.

The invention is explained in more detail below with reference to the drawings.

It shows schematically:
Figure 1 is a sectional view of the non-invasive sensor mounted on a pipe
Figure 2 is a sectional view of the sensor tip in contact with the pipe
Figure 3 is a 3D view of the non-invasive sensor mounted on a pipe

In the following description of the preferred embodiments, identical reference signs denote identical or comparable components.

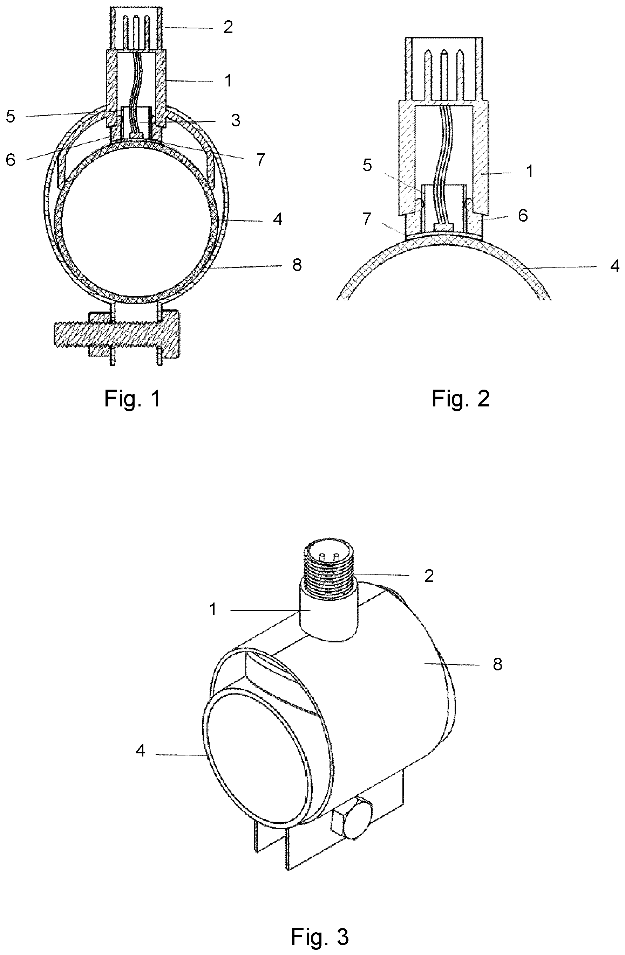

Figure 1 shows a sectional view of an exemplary embodiment of a non-invasive temperature sensor. The temperature sensor comprises a sensor housing 1. Inside the housing 1 is a compressible tip formed by a sensing element 3, a cylindrical element 5, a rubber element 6 and a heat conducting sheet 7. The sensing tip is places against the pipe 4. Inside the pipe 4 a fluid, e.g., a coolant, which is not shown here, can flow or can be at rest. The non-invasive temperature sensor can be used to determine the temperature of the fluid. The sensing element 3 is connected to an external sensor connection 2 which could be wired or wireless, the detailed electronics in the sensor are not represented. The temperature sensor is maintained by a clamping system 8 arranged around the housing 1 applying constant and uniform force keeping the sensor in optimal contact with the pipe 4 surface assuring a good performance in temperature measurement, thanks to the springiness of the clamping system 8 which accommodate expansion and contraction. The clamping system 8 is held on the extremities by a tightening system which can be a screw type. The purpose of a tightening is to provide an adjustable source of sufficient force to solidly hold the temperature sensor against pipes of different diameters, while the tightening force is not excessive which could damage the temperature sensor or the pipe.

Figure 2 shows a close sectional view of an exemplary embodiment of the compressible sensor tip in contact with the pipe 4. The sensing element 3 is placed inside a cylindrical element 5 which is welded to a heat conducting sheet 7. The sensing element 3 is attached to the heat conducting sheet 7 in order to have an optimal heat transfer from the pipe 4 to the sensor 3. The heat conducting sheet 7 is wider than the sensing element in order to have a better heat transfer from the pipe 3, as the thermal resistance of the heat conducting sheet decreases with inversed proportionality to the heat conducting sheet surface area. The heat conducting sheet 7 is designed to adapt to a surface shape of the pipe 4 when the temperature sensor is placed on the pipe 4. The insulating rubber element 6 holds conformally the heat conducting sheet 7 against the pipe 4 surface adapting to the pipe shape thanks to the compressibility of the rubber element 6. The thermally insulating properties of the rubber element 6 allows to minimize energy loss toward the environment during the heat transfer through the heat conducting sheet 7 to the sensing element 3 and optimize the measurement. The rubber element 6 acts as a sealing of the sensor especially the sensing tip inserted into the housing 1.

Figure 3 shows a 3D view of the exemplary embodiment of the non-invasive temperature sensor fixed to a pipe 4. The clamping system 8 surrounds the sensor housing 1 holding the temperature sensor against the pipe 4 and is held on the extremities by a tightening system opposite the sensor in relation to the pipe 4.

### References:

- 1: sensor housing
- 2: external sensor connection
- 3: sensing element
- 4: pipe
- 5: cylindrical element
- 6: rubber element
- 7: heat conducting sheet
- 8: clamping system

## Claims

1. Non-invasive temperature sensor for detecting the temperature at the surface of a pipe (4), comprising
- a sensor housing (1)
- a sensing element (3) arranged within the sensor housing (1)
- a flexible heat conducting sheet (7) arranged on a side of the temperature sensor configured to face the pipe (4) when in use, the heat conducting sheet (7) being thermally coupled to the sensing element (3) and adapted to conform to the surface shape of the pipe (4)
- and a clamping system (8) configured to firmly mount the temperature sensor on the pipe (4),
**characterised in that**
a compressible, thermally insulating rubber element (6) is arranged between the sensor housing (1) and the flexible heat conducting sheet (7) and a cylindrical element (5) is arranged within the rubber element (6) and the sensor housing (1), the cylindrical element (5) being connected to the heat conducting sheet (7) and surrounding the sensing element (3),
wherein the rubber element (6) provides a seal against the outer surface of the cylindrical element (5).

2. Non-invasive temperature sensor according to claim 1, wherein the sensing element (3) is adhered to the heat conducting sheet (7).

3. Non-invasive temperature sensor according to claim 1 and following, wherein the cylindrical element (5) is welded to the heat conducting sheet (7).

4. Non-invasive temperature sensor according to claim 1 and following, wherein the heat conducting sheet (7) is made from stainless steel.

5. Non-invasive temperature sensor according to claim 1 and following, wherein rubber element (6) is made from high graded raw material.

## Patentansprüche

1. Nichtinvasiver Temperatursensor zum Erfassen der Temperatur an der Oberfläche eines Rohrs (4), umfassend
- ein Sensorgehäuse (1),
- ein innerhalb des Sensorgehäuses (1) angeordnetes Sensorelement (3),
- ein flexibles wärmeleitendes Blech (7), das auf einer Seite des Temperatursensors angeordnet ist, die dazu ausgebildet ist, im Gebrauch dem Rohr (4) zugewandt zu sein, wobei das wärmeleitende Blech (7) thermisch mit dem Sensorelement (3) gekoppelt und dazu eingerichtet ist, sich an die Oberflächenform des Rohrs (4) anzupassen, und
- ein Klemmsystem (8), das dazu ausgebildet ist, den Temperatursensor fest an dem Rohr (4) zu befestigen,
**dadurch gekennzeichnet, dass**
ein kompressibles, wärmeisolierendes Gummielement (6) zwischen dem Sensorgehäuse (1) und dem flexiblen wärmeleitenden Blech (7) angeordnet ist und ein zylindrisches Element (5) innerhalb des Gummielements (6) und des Sensorgehäuses (1) angeordnet ist, wobei das zylindrische Element (5) mit dem wärmeleitenden Blech (7) verbunden ist und das Sensorelement (3) umgibt, wobei das Gummielement (6) eine Abdichtung gegenüber der Außenfläche des zylindrischen Elements (5) bereitstellt.

2. Nichtinvasiver Temperatursensor nach Anspruch 1, wobei das Sensorelement (3) an das wärmeleitende Blech (7) angeklebt ist.

3. Nichtinvasiver Temperatursensor nach Anspruch 1 und den folgenden Ansprüchen, wobei das zylindrische Element (5) mit dem wärmeleitenden Blech (7) verschweißt ist.

4. Nichtinvasiver Temperatursensor nach Anspruch 1 und den folgenden Ansprüchen, wobei das wärmeleitende Blech (7) aus Edelstahl hergestellt ist.

5. Nichtinvasiver Temperatursensor nach Anspruch 1 und den folgenden Ansprüchen, wobei das Gummielement (6) aus hochwertigem Rohmaterial hergestellt ist.

## Revendications

1. Capteur de température non invasif permettant de détecter la température à la surface d'un tuyau (4), comprenant
- un boîtier de capteur (1)
- un élément sensible (3) agencé à l'intérieur du boîtier de capteur (1)
- une feuille thermoconductrice souple (7) agencée sur un côté du capteur de température conçu pour faire face au tuyau (4) lors d'une utilisation, la feuille thermoconductrice (7) étant couplée thermiquement à l'élément sensible (3) et adaptée pour épouser la forme de surface du tuyau (4)
- et un système de serrage (8) conçu pour monter fermement le capteur de température sur le tuyau (4),
**caractérisé en ce qu'**un élément en caoutchouc compressible et thermiquement isolant (6) est agencé entre le boîtier de capteur (1) et la feuille thermoconductrice souple (7) et un élément cylindrique (5) est agencé à l'intérieur de l'élément en caoutchouc (6) et du boîtier de capteur (1), l'élément cylindrique (5) étant relié à la feuille thermoconductrice (7) et entourant l'élément sensible (3),
dans lequel l'élément en caoutchouc (6) assure une étanchéité contre la surface externe de l'élément cylindrique (5).

2. Capteur de température non invasif selon la revendication 1, dans lequel l'élément sensible (3) est collé à la feuille thermoconductrice (7).

3. Capteur de température non invasif selon la revendication 1 et les suivantes, dans lequel l'élément cylindrique (5) est soudé à la feuille thermoconductrice (7).

4. Capteur de température non invasif selon la revendication 1 et les suivantes, dans lequel la feuille thermoconductrice (7) est réalisée en acier inoxydable.

5. Capteur de température non invasif selon la revendication 1 et les suivantes, dans lequel l'élément en caoutchouc (6) est réalisé en matière première de haute qualité.
